Europäisches Patentamt

European Patent Office

Office européen des brevets

(11) Publication number: **0 322 895**
**A2**

# (12) EUROPEAN PATENT APPLICATION

(21) Application number: 88121794.7

(22) Date of filing: 28.12.88

(51) Int. Cl.⁴: **G11B 5/858 , H01F 41/14 , C23C 18/50**

(30) Priority: 28.12.87 US 138244

(43) Date of publication of application:
05.07.89 Bulletin 89/27

(84) Designated Contracting States:
AT BE CH DE ES FR GB GR IT LI LU NL SE

(71) Applicant: DOMAIN TECHNOLOGY
304 Turquoise Street
Milpitas California 95035(US)

(72) Inventor: Esparza, Leonard
20805 Fargo Drive
Cupertino California 95014(US)
Inventor: Tang, George H.
3381 Lynn Oaks Drive
San Jose California 95117(US)

(74) Representative: Reinhard, Skuhra, Weise
Leopoldstrasse 51
D-8000 München 40(DE)

(54) Methods and compositions for electroless plating of magnetic recording media.

(57) A plating bath for the electroless coating of magnetic recording media substrates includes cobalt, nickel, and zinc metal ions in a buffered solution including a reducing agent, a strong base, and chelants. Typically, the reducing agent will include phosphorous which will form a portion of the ferromagnetic layer being deposited on the substrate. By utilizing malic acid or a malate salt as a chelating agent, magnetic media having improved signal-to-noise ratios, switching field distributions, and corrosion resistance, have been obtained.

EP 0 322 895 A2

# METHODS AND COMPOSITIONS FOR ELECTROLESS PLATING OF MAGNETIC RECORDING MEDIA

## BACKGROUND OF THE INVENTION

### 1. Field of the Invention

The present invention relates generally to methods and compositions for the production of magnetic recording media, and more particularly to a process and plating bath for the electroless plating of a cobalt, phosphorus, nickel film having superior magnetic properties on a suitable disk substrate.

Ferromagnetic films may be deposited on disk substrates by a variety of techniques, including electroplating, sputtering, vapor deposition, ion plating, and electroless plating. Of particular interest to the present invention are electroless plating techniques where the ferromagnetic films are deposited in a bath by chemical reduction without the application of an electric current.

Electroless plating is a particularly convenient and economic method for the deposition of ferromagnetic films since it requires neither the expensive capital equipment associated with sputtering and vapor deposition, nor the substantial electricity costs associated with electroplating. The magnetic characteristics of electroless plated media, however, are not always equal to those obtained by the other techniques. In particular, the signal-to-noise ratio obtained by sputtering and vapor deposition are normally superior to those obtained by electroless plating of the ferromagnetic film. Other characteristics, such as switching field distribution and corrosion resistance, are also found frequently to be inferior in electroless plated disks when compared to disks prepared by other fabrication methods.

For these reasons, it would be desirable to provide methods and baths for electroless plating which result in magnetic media having improved recording characteristics. In particular, it would be desirable to provide electroless plating methods which yield media having improved signal-to-noise ratios, switching field distributions, corrosion resistance, and the like.

### 2. Description of the Background Art

The use of electroless plating techniques for depositing cobalt, nickel, phosphorus films on various substrates for the production of magnetic recording media is known. U.S. Patent No. 4,128,691, describes an electroless plating solution including cobalt, nickel, iron, barium, and phosphorus ions, a reducing agent (selected from malonic acid, succinic acid, tartaric acid, citric acid and their ammonium salts), and a pH regulator. Osaka et al. (1983) J. Electrochem. Soc. 130:568-571, describes an electroless plating bath including $CoSO_4$, $NiSO_4$, $MnSO_4$, sodium hypochlorite, ammonium sulfate, and malonic acid. The addition of zinc in the deposited cobalt-phosphorus film is disclosed in Fisher (1966) IEEE Trans. Mag. MAG-2:251. Electroless plating is also discussed in Kahn and Nicholson (1986) J. Mag. Mag. Matl. 54-57:1654-1656; Chow et al. (1972) J. Electrochem. Soc. 119:1614-1619; Lubrorsky (1970) IEEE Trans. Mag. MAG-5:502-506; and Judge et al. (1965) J. Appl. Phys. 36:948-949.

## SUMMARY OF THE INVENTION

The present invention provides an improved plating bath which can be used for the electroless coating of a ferromagnetic film onto a suitable substrate, such as a rigid disk substrate. The plating bath comprises a buffered solution including cobalt ion, nickel ion, hypophosphite ion (which acts both as a source of phosphorus and as a reducing agent), a strong base, a first chelating agent, and malate ion in the form of malic acid or a malic acid salt. The malic acid acts as a chelating agent for the nickel and provides ferromagnetic films having improved characteristics. Preferably, the plating bath will further comprise zinc ion, which enhances the magnetic characteristics of the resulting ferromagnetic film.

Magnetic media prepared by otherwise conventional electroless plating techniques employing the plating bath composition of the present invention have been found to display enhanced magnetic properties. Specifically, such magnetic media have been found to display an improved signal-to-noise ratio, typically

2

below about -30db, and a lowered switching field distribution parameter, typically in the range from about 0.05 to 0.10. Additionally, magnetic media prepared according to the present invention will possess enhanced corrosion resistance, and it has been found that the coercivity of the media can be easily adjusted within a desired range from about 600 to 1500 Oersteds (oe) by adjusting the relative ratios of the various plating bath components, without diminishing the improvements in the signal-to-noise ratio or the switching field distribution.


DESCRIPTION OF THE SPECIFIC EMBODIMENTS


The plating bath composition of the present invention comprises a buffered electrolyte solution including metal ions, a reducing agent, a base, and chelants. The solution will almost always be an aqueous solution, although other polar solvents, such as alcohols, might also find use. The metal ions include cobalt, nickel, and optionally zinc. The cobalt is ferromagnetic and provides the magnetic recording ability of the resulting media, while both the nickel and the zinc are not ferromagnetic. The nickel, together with the phosphorus, provides a non-magnetic matrix for supporting the cobalt in the magnetic media film which is deposited on the substrate. The zinc ion, when employed in combination with nickel and phosphorus in the plating bath composition, enhances the magnetic properties of the resulting magnetic media film, particularly having beneficial effects on the signal-to-noise ratio and/or the switching field distribution. Although the mechanism of enhancement is not known, it appears that the zinc modifies the growth characteristics of the magnetic film as no substantial amount of zinc is present in the film.

The metal ions will typically be added to the plating bath as metal salts. The identity of the counter ion is not critical, but care should be taken that the salt has a high solubility and that the counter ion(s) do not interfere in the plating reaction. Suitable counter ions include chloride, bromide, fluoride, iodide, boride, nitrate, sulfate, and the like. Conveniently, all the metal salts will include a common counter ion, preferably chloride or sulfate.

Suitable reducing agents include sodium hypophosphite, potassium hypophosphite, ammonium hypophosphite, and the like. Particularly preferred is sodium hypophosphite which provides a source of phosphorus in the resulting ferromagnetic layer.

A strong base is necessary to adjust the pH of the plating bath to a pH in the range from about 8.0 to 9.5, usually in the range from about 8.5 to 9.2. Suitable bases include sodium hydroxide, potassium hydroxide, and the like. The plating bath will be buffered to remain within the desired pH range. Conveniently, boric acid may be utilized as the buffer.

Chelants are provided to sequester the metal ions by forming coordination complexes where the metal ion is at the center of a group of attached ligands. Suitable chelating agents include ethylenediamine tetracetic acid (EDTA), nitrilotriacetic acid, sodium citrate, and the like. Particularly preferred is sodium citrate.

According to the present invention, a second chelating agent, malate ion derived from malic acid or a salt of malic acid, is provided. It has been found that the malate ion acts in conjunction with the primary chelating agent to provide a particularly effective distribution of the metals and phosphorus in the resulting ferromagnetic layer. That is, by adding the malate ion to the plating bath, the magnetic media which is produced upon subsequent electroless plating have the improved magnetic properties discussed above.

In addition to the components just discussed, the plating bath will optionally include sodium phosphate which appears to act as a crystal growth promoter during the plating process.

Exemplary formulations of the plating bath of the present invention are set forth in Table 1 below.

3

TABLE 1

| Component | Example | Concentration Range | |
|---|---|---|---|
| | | Broad | Narrow |
| Cobalt | $CoCl_2 \cdot 6H_2O$ | 3 - 10g/L | 4 - 8g/L |
| Nickel | $NiCl_2 \cdot 6H_2O$ | 0.25 - 5g/L | 0.5 - 2.5g/L |
| Zinc | $ZnCl$ | 0 - 0.2g/L | 0.025 - 0.1g/L |
| Reducing Agent | $NaH_2PO_2 \cdot H_2O$ | 2.5 - 7.5g/L | 3 - 5g/L |
| Buffer | $H_3BO_3$ | 8 - 25g/L | 10 - 20g/L |
| Strong Base | $NaOH$ | 4 - 12g/L | 5 - 10g/L |
| Chelant | $Na_3C_6H_5O_7 \cdot 2H_2O$ | 20 - 40g/L | 25 - 35g/L |
| Crystal Growth Promoter | $Na_2PO_4 \cdot 7H_2O$ | 0 - 15g/L | 3 - 10g/L |
| Malate | Malic Acid | 5 - 15g/L | 8 - 12g/L |

Magnetic recording media may be prepared according to the present invention by plating an appropriate metal substrate. Suitable substrates may be formed from a variety of non-ferromagnetic materials, such as aluminum, glass, ceramics, and the like. Particularly suitable are aluminum disks which have been machined to appropriate dimensions and tolerances. Prior to plating the aluminum disk is coated with a catalytic layer, typically a nickel, phosphorus alloy having a thickness in the range from about 25 to 75 mil, usually being about 40 to 50 mil. Other catalytic layers, such as iron, iron alloys, gold, cobalt, palladium and the like might also find use, but are generally not preferred because of increased cost. The catalytic metal layer may be deposited by conventional processes, such as electro-plating or electroless plating.

After depositing the catalytic metal layer, the coated substrate will be cleaned, typically be treatment in a hot alkaline cleaning solution, followed by rinsing, followed by cleaning in a dilute acid solution. Such treatment removes any oxides which may have formed on the coated substrate surface.

The substrate is then immersed in the plating bath which is maintained at an elevated temperature, typically in the range from about 60 to 95°C, more typically in the range from about 80 to 90°C. The plating bath is gently agitated, and deposition occurs at a rate which is temperature dependent. The deposition is allowed to occur until the ferromagnetic layer reaches a thickness in the range from about 1 to 7 μin., more usually in the range from about 2 to 4 μin. Such deposition typically takes in the range from about 1 to 10 minutes, more typically in the range from 2 to 6 minutes. After the desired thickness has been reached, the substrate is removed from the plating bath, rinsed, and dried. The resulting magnetic disk is then ready for use.

The following examples are offered by way of illustration, not by way of limitation.

## EXPERIMENTAL

Four aluminum substrates were prepared as follows.

Disk forms were punched from aluminum sheet stock and baked flat and stress-free. The disk forms were then ground to a thickness of about 50 mils. After cleaning, the forms were coated with an 0.75 mil thick nickel-phosphorus alloy by electroless plating. The nickel-phosphorus alloy acts as a catalyst for media deposition. Next, the nickel-phosphorus coated disk was polished mechanically to a very fine finish. Finally, the disk forms were textured by cutting very fine grooves into the polished surface to improve wear characteristics.

The substrates prepared as just described were cleaned by immersion in 60 to 95°C for 2 to 10 minutes. After rinsing with water, the substrates were cleaned in 0.1 M hydrochloric acid, which removes oxides which may have formed.

The cleaned substrates were then each immersed in a plating bath having the formulation set forth in Table 1 below. The plating solutions were maintained at 80-88°C and gently agitated. After from 1 to 6 minutes, the substrates were removed from the plating bath, rinsed, and dried. Media coercivity, switching field distribution, and signal-to-noise ratio were determined for each coated substrate by conventional techniques. The results are set forth in Table 2.

TABLE 2

| Bath Composition/Media Parameter | Substrate | | | |
|---|---|---|---|---|
| | A | B | C | D |
| Phosphate Ion | $5 \times 10^{-2}$M | $6 \times 10^{-2}$M | $6 \times 10^{-2}$M | $6 \times 10^{-2}$M |
| Cobalt Ion | $3.1 \times 10^{-2}$M | $2.5 \times 10^{-2}$M | $2.5 \times 10^{-2}$M | $2.5 \times 10^{-2}$M |
| Nickel Ion | $1.1 \times 10^{-2}$M | $0.5 \times 10^{-2}$M | $0.4 \times 10^{-2}$M | $0.7 \times 10^{-2}$M |
| Hypophosphate | $6.3 \times 10^{-2}$M | $3.4 \times 10^{-3}$M | $3.4 \times 10^{-3}$M | $3.4 \times 10^{-3}$M |
| Zinc Ion | $4.2 \times 10^{-4}$M | $4.2 \times 10^{-4}$M | $4.2 \times 10^{-4}$M | $4.2 \times 10^{-4}$M |
| Sodium Citrate | 30.5g/L | 30.5g/L | 30.5g/L | 30.5g/L |
| Sodium Hydroxide | 7.73g/L | 7.73g/L | 7.73g/L | 7.73g/L |
| Boric Acid | 15.0g/L | 15.0g/L | 15.0g/L | 15.0g/L |
| Malate Ion | $5.8 \times 10^{-2}$M | $7.9 \times 10^{-2}$M | $7.9 \times 10^{-2}$M | $7.9 \times 10^{-2}$M |
| pH | 8.54 | 9.06 | 9.10 | 9.10 |
| Coercivity | 950 oe | 950 oe | 1100 oe | 700 oe |
| S/F Distribution | 0.12-0.16 | 0.08-0.10 | 0.08-0.10 | 0.08-0.10 |
| S/N Ratio | -32.2 db | -33.8 db | -34.0 db | -34.0 db |

As can be seen from the above data, all media disks display excellent signal-to-noise (S/N) ratios below -30 db. Additionally, the switching field (S/F) distributions were in the desired range from about 0.05 to 0.10, and the coercivities were adjustable by varying the component concentrations within the plating bath without substantial increase in the signal-to-noise ratio.

Although the foregoing invention has been described in some detail by way of illustration and example for purposes of clarity of understanding, it will be obvious that certain changes and modifications may be practiced within the scope of the appended claims.

**Claims**

1. A method for electroless plating of a cobalt, nickel, phosphorus film on a substrate to produce magnetic recording media, said method comprising:
immersing the substrate in a buffered plating bath including preselected concentrations of cobalt ion, nickel ion, hypophosphite ion, a strong base, a primary chelating agent, and malate ion, at an elevated temperature; and
removing the substrate from the plating bath after a time sufficient for the plated film to reach a preselected thickness.

2. A method as in claim 1, wherein the cobalt ion is present at a concentration in the range from about 3 to 10 g/L, the nickel ion is present at a concentration in the range from about 0.25 to 5 g/L, the sodium hypophosphite is present at a concentration in the range from about 2.5 to 7.5 g/L, the strong base is sodium hydroxide present at a concentration in the range from about 4 to 12 g/L, the primary chelating agent is sodium citrate present at a concentration in the range from about 20 to 40 g/L, and the malate ion is present at a concentration in the range from about 5 to 15 g/L.

3. A method as in claim 2, wherein the primary bath further includes sodium phosphate present at a concentration below about 15 g/L.

4. A method as in claim 1, wherein the substrate is an aluminum disk.

5. A method as in claim 4, wherein the aluminum disk includes a catalytic metal layer comprising a nickel, phosphorus coating having a thickness in the range from about 25 to 75 mil.

6. An improved plating bath of the type including cobalt ion, nickel ion, hypophosphite ion, a strong base, and a chelating agent present in an aqueous buffer solution, said improvement comprising the addition of a preselected concentration of malate ion to the plating bath.

7. An improved plating bath as in claim 6, wherein the malate ion is present at a concentration in the range from about 5 to 15 g/L.

8. An improved plating bath as in claim 6, further including zinc ion present at a concentration less than about 0.2 g/L.

9. A plating bath comprising a buffered aqueous solution of:

nickelous chloride at 0.5 to 2.5 g/L;

cobaltous chloride at 4 to 8 g/L;

zinc chloride at 0.025 to 0.1 g/L;

sodium hypophosphite at 3 to 5 g/L;

boric acid at 10 to 20 g/L;

sodium hydroxide at 5 to 10 g/L;

sodium citrate at 25 to 35 g/L;

sodium phosphate at 3 to 10 g/L; and

malic acid at 8 to 12 g/L.